# EUROPEAN PATENT APPLICATION

(11) **EP 2 753 069 A1**
(43) Date of publication of application: **09.07.2014**
(21) Application number: 13150541.4
(22) Date of filing: 08.01.2013
(51) Int. Cl.: H04N 5/262

(54) **Method of dynamic real-time video processing and apparatus to execute the method**

(71) Applicant: PIXarithmic GmbH, 64331 Weiterstadt (DE)
(72) Inventor: Foedrowitz, Andreas, 64331 Weiterstadt (DE)
(74) Representative: Rossmanith, Manfred

(57) **Abstract**

A method of controlling a video/audio processing apparatus having a graphics processing unit is suggested. The method comprises the generation of a flow graph composed of nodes (404-407, 409-416) and edges (408). The nodes contain information about processing operations to be performed by the graphics processing unit and the edges contain information about routing of signals between the nodes. The graphics processing unit executes processing operations according to the information represented by the nodes in the flow graph. Additionally, a video processing apparatus is suggested which comprises a graphics processing unit and which is adapted for executing the proposed method.

## Description

### Field of the Invention

The present invention is related to a method of controlling the video/audio processing apparatus and to the video processing apparatus itself. In particular, the present invention is related to a method according to claim 1, to an apparatus according to claim 10, and to a program code and a computer program product according to claims 11 and 12.

### Background

Live video productions such as TV productions are realized today using vision mixers. Vision mixers are commercially available e.g. from the companies Grass Valley, Sony, Snell, and Ross.

A vision mixer (also called video switcher, video mixer, production switcher or simply mixer) is a device used to select between different video input signals to generate a video output signal. Besides switching directly between two input signals, the vision mixer can also generate different kinds of transitions. Direct switching means that frame N is from a first input signal and frame N + 1 is from a second input signal. Transitions between two input signals include simple dissolves and various kinds of effect transitions. Most mixers are equipped with keyers and matte generators to perform keying operations and to generate background signals which are also called mattes.

The vision mixer also performs the routing and switching of audio signals accompanying the video signals. However, since the processing of video signals is more complex than the processing of audio signals the present patent application is focused on the video signal. It is to be understood that in the context of the present patent application the processing of the video signal also implies a corresponding processing of an accompanying audio signal. Only for the sake of better intelligibility of the description of the present invention audio signals are not always mentioned in addition to the video signals.

In order to enable the multiple functionalities of vision mixers they consist of a huge amount of hardware components to process the video signals. The processing hardware components are located in one housing and are connected with local bus solutions in order to control all video processing hardware in real-time to meet the fast control requirements of live productions.

The vision mixer comprises a central mixing electronic, several input channels and at least one output channel, a control unit and a user interface. Such kind of vision mixer is described for example in DE 103 36 214 A1.

The mixing electronic is provided with up to 100 or even more video input signals at the same time. The input signals are live video signals from cameras, recorded video clips from a server such as archived material, slow-motion clips from dedicated slow-motion servers, synthetic images, animations and alphanumeric symbols from graphic generators.

Until present, FPGAs (field programmable gate arrays) are used to process video. The operations on the video are limited to what the FPGA configuration's architecture provides. An FPGA configuration (FPGA firmware) allocates a certain fixed amount of processing cells for each operation. Corresponding to the fixed amount of processing cells, a fixed set of processing operations (e.g. key signal generation, DVE (Digital Video Effects) effects, mixing) is available. Usually, there are several instances of a particular type of operation, for example two luminance keyers. In many cases the provided number of instances for a particular processing operation is insufficient in the sense that only two luminance keyers are available while three are required to execute a certain processing operation. At the same time other processing functionalities of the specific FPGA configurations are not used, for example a chroma key. However, the unused functionalities still occupy valuable space and capacity of the utilized FPGA. A possible solution to this kind of problem is to adapt the FPGA firmware.

Although FPGAs can be reprogrammed on the fly with a different configuration, this is not possible in real time i.e. at a video frame clock base having usually periods of 1/50 seconds or 1/60 seconds depending on the frame rate of the video. In fact, in many media productions there are timeline sequences requiring changes to the architecture on a frame by frame basis, which means that the configuration needs to be changed on the basis of the frame clock rate. In order to meet this requirement, many loadable configurations would have to be provided to satisfy all different architectural needs. Configurations cannot be created on the fly, the compilation usually from VHDL or Verilog sources of a single configuration set of the traditional midsize/high-end vision mixer would need several hours. VHDL and Verilog are hardware description languages used in electronic design automation to describe digital and mixed-signal systems such as field-programmable gate arrays and integrated circuits.

### Invention

Conventional video processing systems involve expensive hardware which is not as flexible as it would be desirable.

In order to overcome the limitations of conventional vision mixer technology, the present invention relies on video processing on graphics processing units (GPU). The present invention aims at supporting the user in operating and controlling a video processing apparatus comprising a GPU.

According to a first aspect, the present invention suggests a method of controlling a video/audio processing apparatus. The apparatus comprises at least one graphics processing unit. The method comprises the following steps
- providing the graphics processing unit with software enabling all operations of the graphics processing unit upon request;
- generating a flow graph composed of nodes and edges wherein the nodes contain information about processing operations to be performed by the graphics processing unit and the edges contain information about routing of signals between the nodes;
- evaluating the flow graph to extract the information about desired processing operations and routing of signals;
- executing the processing operations by at least one graphics processing unit according to the information represented by the nodes in the flow graph; and
- routing of the signals between the nodes contained in the flow graph.

According to an advantageous embodiment the method further comprises the step of utilizing a graphical user interface to generate the flow graph. In this case it has been found useful that the method further comprises the step of associating graphical elements with the nodes and edges of the flow graph and displaying the graphical elements on a screen.

The method may further comprise the step of displaying the flow graph on a screen in a checkerboard like structure.

In a useful embodiment the method further comprises the step of defining the sequence of the processing operations by selecting the positions of the graphical elements displayed on the screen.

In this case the method may comprise the step of defining the sequence of the processing operations such that the processing starts from top to bottom and from left to right in the displayed checkerboard like structure.

In an advantageous embodiment the method further comprises the step of
- identifying nodes in the flow graph which are no longer involved in the video processing; and
- de-emphasizing those nodes on the screen.

Finally, the method can comprise the step of updating the executed object code in real time.

According to a second aspect, the present invention suggests a video processing apparatus connected to a data link for receiving and sending video data. The video processing apparatus is provided with a graphics processing unit to process video input data for producing video output data. The video processing apparatus is adapted for executing the method according to one or several of the preceding claims.

In an embodiment of the video processing apparatus according to the present invention the data links are part of an Internet protocol or SDI data network.

Advantageously, the video processing apparatus is provided with a graphical user interface enabling the user to control the graphics processing unit. In this case the graphical user interface can be based on the flow graph defining the flow of video data and defining processing steps applied to the video data.

In an embodiment the present invention is implemented as software program code. Therefore, according to another aspect the present invention proposes a computer program for controlling a video/audio processing apparatus. The computer program, when executed on a computer, causes the computer to perform the steps of the method according to the invention.

According to a yet another aspect the present invention suggests a computer program product for controlling a video/audio processing apparatus comprising a computer usable medium having a computer readable program. The computer readable program, when executed on a computer, causes the computer to perform the steps of the method according to the invention.

Further features and advantages of the present invention will become apparent when reading the detailed description with the appended drawings.

### Drawings

In the drawing an embodiment of the present invention is illustrated. Features which are the same in the figures are labeled with the same or a similar reference numbers. It shows:
Fig. 1 a schematic block diagram of a conventional vision mixer;
Figs. 2A and 2B a schematic illustration of the vision mixer shown in Fig. 1;
Fig. 3 a schematic block diagram of the system for video processing according to the present invention;
Fig. 4 a graphical user interface showing the flow graph as a representative of the video processing;
Fig. 5 a different illustration of the flow graph of figure 4;
Fig. 6 another illustration of the flow graph of figure 4; and
Fig. 7 the illustration of the flow graph of figure 6 with a different signal flow.

### Detailed description

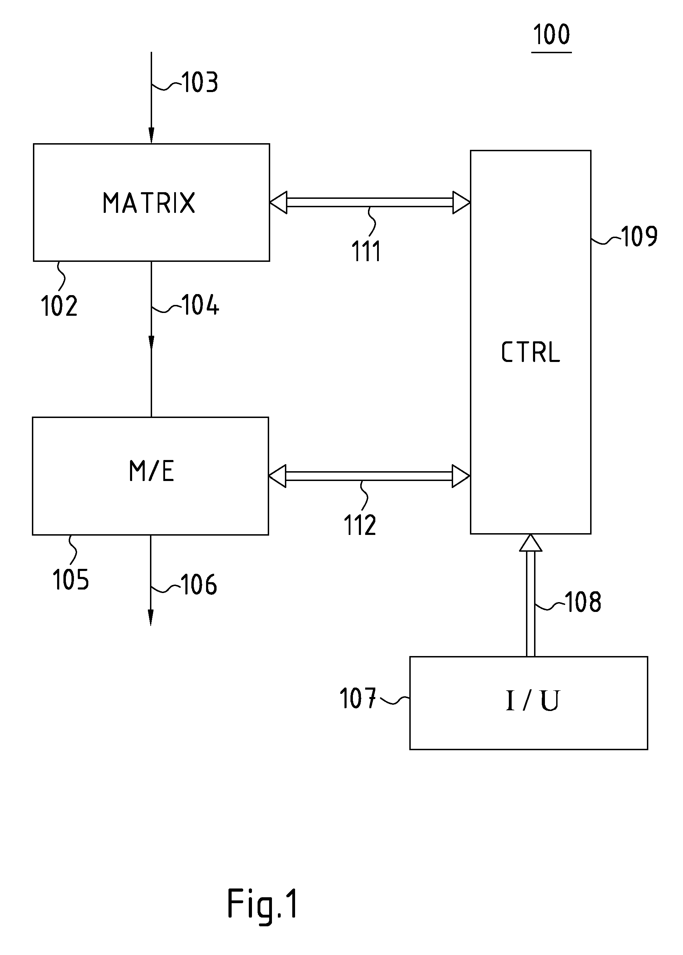

Figure 1 shows a schematic block diagram of a conventional vision mixer 100 which is also briefly called mixer. The mixer 100 comprises a cross point matrix or matrix 102 having a plurality of video inputs and a plurality of video outputs symbolized by arrows 103 and 104, respectively. Professional vision mixers are using serial digital interface (SDI) digital data for receiving or sending video data. The SDI digital data also comprise embedded audio streams, ancillary data, clock data and meta data. In a 1.5 Gbit/s data stream there are 16 embedded audio channels and in a 3.0 Gbit/s data stream there are 32 embedded audio streams. The mixer 100 can send and receive digital data also in other formats such as high definition serial interface data (HD - SDI) and digital component video. The matrix 102 is adapted for connecting any one of the video inputs with any one of the video outputs in response to a user command. The output channels of the matrix 102 are provided to a mixer and video effect stage (M/E stage) 105 which is also called a mixer level. The video output signal processed by the M/E stage 105 is indicated with an arrow 106. The functionalities of mixer 100 are controlled by means of an input unit 107 into which the user can enter control commands to control and execute the processing of the video input signals and to create and to produce a desired video output signal. The input unit 107 transfers the control commands via the data and control bus 108 to a control unit 109. The control unit 109 interprets the user input commands and addresses corresponding command signals to the matrix 102 and the M/E stage 105. For this purpose the control unit 109 is connected with the matrix 102 and the M/E stage 105 with data and control buses 111 and 112, respectively. The buses 108, 111, and 112 are bidirectional buses allowing return messages to the control unit 109 and the input unit 107. The return messages provide feedback of the operating status of matrix 102 and the M/E stage 105. The input unit 107 displays status indicators reflecting the operating status of the mixer 100 for the information of the user.

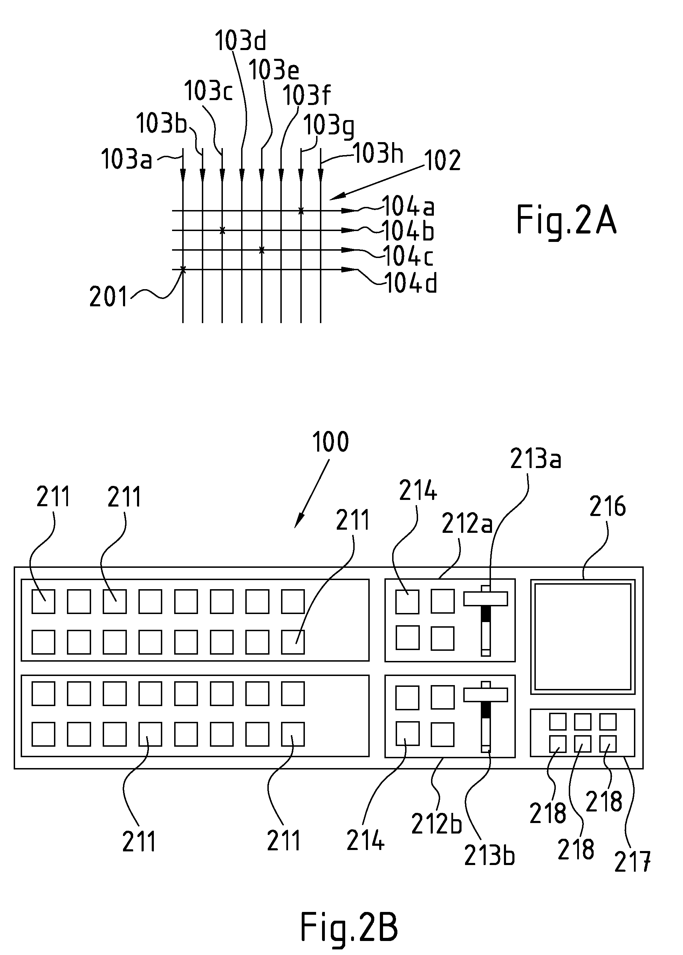

Figures 2A and 2B show the mixer 100 of figure 1 in greater detail.

Figure 2A shows that the matrix 102 has eight video input channels 103a - 103h and four video output channels 104a - 104d. The matrix 102 allows the user to selectively switch any of the video input channels 103a - 103h to any one of the video output channels 104a - 104d. A small cross, like the one at connection point 201, indicates which connection is actually chosen. In the usual nomenclature the matrix 102 shown in figure 2A is denominated as an 8 x 4 matrix. A vision mixer in a modern production environment can incorporate a 256 x 256 matrix making the operation of the modern vision mixer a complicated and demanding task.

Figure 2B shows the physical user interface of mixer 100 of figure 1. The switching of one of the video input channels 103a - 103h to one of the four video output channels 104a - 104d is executed by operating a pushbutton 211 by the user. The four video output channels form two pairs of video output channels. Each pair of video output channels is provided to an M/E stage 212a and 212b, respectively. The M/E stages 212a and 212b are operated by effect levers 213a and 213b and selection buttons 214. In practice the output signal of the first M/E stage 212a is sometimes utilized as a new input signal for the second M/E stage 212b, or vice versa. In a parameter input array 216 the user can enter parameters which determine the video effects to be executed. Finally, there is a so-called downstream keyer 217 which is used to key-in text messages into the final video image. It is noted that the vision mixer in figure 2B is very much simplified. Modern vision mixers are provided with many more video input and output channels as it has been mentioned above and comprise up to eight downstream keyers. In consequence such a modern vision mixer is provided with more than 1000 pushbuttons. Obviously, a modern vision mixer is a complicated and expensive hardware device which is difficult to operate. The complexity of conventional vision mixers requires well trained users. Ironically, sometimes the users are not sufficiently trained to save training costs. But in consequence many functions of the expensive equipment remain unused because the users are not aware of all functions.

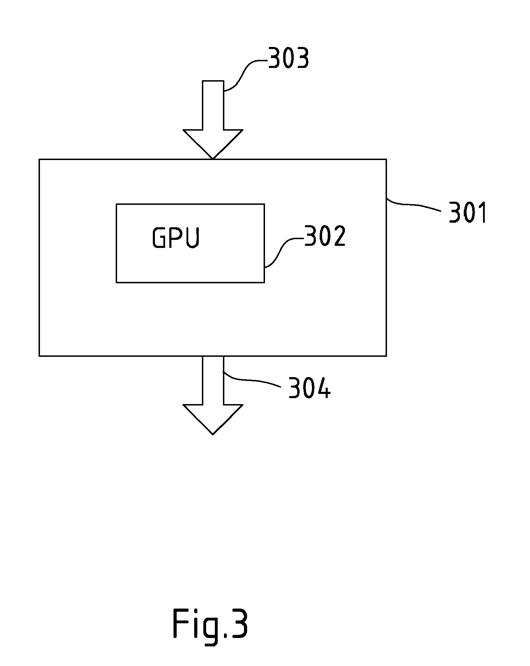

Figure 3 is a schematic block diagram of a video processing apparatus 301 according to the present invention. The video processing apparatus 301 utilizes a commercially available graphics processing unit (GPU) 302 to perform the video processing. Even though only one GPU 302 is shown in figure 3 there are other embodiments of the video processing apparatus 301 having a plurality of GPUs. The video processing apparatus 301 receives the video input data through a digital data link 303. The digital data link 303 is e.g. an Internet protocol (IP) based data link or any other kind of digital network link. Additionally, digital SDI cables used by conventional vision mixers can serve as supplementary or alternative data links. The digital data link 303 can even comprise a combination of different types of data links including those already mentioned. The data link 303 provides input data from a plurality of video sources such as cameras, video clip servers, disk recorders and the output of other video processing apparatuses. Similarly, the processed video output data are provided as digital data by another IP or SDI data link 304. It is noted that the IP or SDI data links 303, 304 are not necessarily the same network or only one physical medium. The data links 303, 304 are to be understood as logical data links. The architecture of the video processing apparatus 301 allows building the hardware platform on standardized IT technology components such as servers, graphics processing units (GPU) and high-speed data links. Typically, these standardized IT components are less costly than dedicated broadcast equipment components. Besides the cost advantage the architecture benefits automatically from technological progress in the area of the above-mentioned IT components.

The GPU 302 is capable to perform a multitude of video processing functions using the video input data. Therefore, the user of the video processing apparatus 301 requires an interface to control the video processing. The application software itself is not convenient for the user to define and control the video processing in the processing unit.

Therefore the present invention provides a graphical user interface visualizing available processing functions as well as the underlying signal connections in an intuitive way for the user. For this purpose the graphical user interface program effects graphical elements being displayed for the user on a screen. The screen is a touch screen or it is communicatively connected with other input means known from computer technology such as a mouse, trackball, graphics tablet, joystick, keyboard etc.

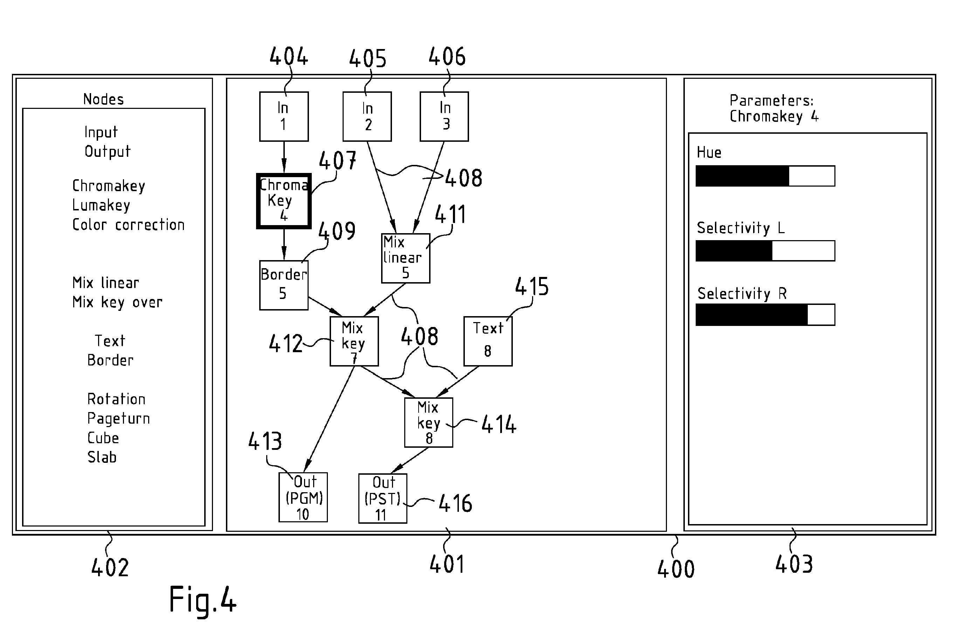

The graphical user interface is represented conceptually in figure 4. Figure 4 shows the screen 400 on which the graphical user interface is displayed. The screen shows three windows which are arranged side by side, namely a central window 401, a left window 402 and a right window 403.

The central window 401 displays a flow graph composed of nodes and edges. The nodes are shown as squares in the central window 401 and the edges as arrows pointing from one node to another one. The flow graph and its functionalities will be described in detail in the following.

Since the staff in video productions is used to the conventional hardware which receives the data of each video source through an individual video channel it is helpful to follow this concept in the graphical user interface.

The video processing apparatus 301 is capable of separating the video input data received through data link 303 into different sources by means of identifiers in the data stream. Therefore, in the present case the video input data is represented in the graphical user interface as separate video input nodes 404 to 406 in window 401.

Of course three video channels providing video data from three different sources are only an example and in other embodiments of the present invention there can be more or fewer than three video input channels.

The available video processing functionalities which can be performed by the graphics processing unit 302 are presented on the left-hand side in figure 4 in the left window 402 which is labeled with "Nodes". The window 402 is a kind of toolbox from which the user can select different kind of functionalities provided by the GPU 302. The available functionalities are listed in window 402. The user of the video processing apparatus 301 can control the GPU 302 to perform certain processing steps by drag and drop of the desired functionality from left window 402 into the central window 401. When the user drops the selected functionality into window 401 it is converted into a corresponding node. E.g. when the user selects the functionality "chroma key" from the list in window 402 and drops it in window 401 it is converted into a node 407 labeled "chroma key". After selecting desired processing functionalities the user defines the signal flow by connecting nodes in window 401 with edges which are represented in figure 4 by arrows 408. It is noted that the user has absolute freedom with regard to the way he builds the flow graph. He can select and delete nodes and edges in an arbitrary sequence and rearrange them in window 401 at his discretion as he develops his video production. This kind of freedom in the design of a video production does not exist for conventional video production systems where each processing functionality is embodied in hardware including the routing of signals. For example, if the hardware provides only two mixing levels, then a video production requiring three mixing levels cannot be realized with this kind of hardware. At the same time the conventional video production system may include hardware which remains unused and is therefore useless for the desired video production.

In contrast to that the video processing apparatus 301 is based on software and the GPU 302 performs any kind of desired video processing functionality provided that there is sufficient processing power. The video production apparatus 301 according to the present invention is therefore much more flexible and cost efficient than conventional video production systems.

In a next step the user connects in input channel with the selected functionality by an arrow. The arrows 408 represent the signal flow during the video processing. Specifically, the input node 404 is connected with the chroma key node 407. The output signal of chroma key node 407 is provided to a border generator 409 where the keyer signal is used to draw a border into the video signal, following and surrounding the spatial shape of the keyer signal. The input nodes 405 and 406 are connected to with linear mixer node 411. The output signals of border generator 409 and the linear mixer 411 are coupled to a key mixer node 412. The output signal of key mixer node 412 is connected to a program output node 413 and to another key mixer node 414 which receives as a second input the output signal of a text generator node 415. The resulting output signal of the key mixer node 414 is connected with a preset output node 416.

All nodes in figure 4 have a unique identification number from 1 to 11 to facilitate their identification by the user.

It is an advantage of the present invention that the graphical representation of the video processing is very close to the video processing in a conventional video processing apparatus. However, since the present invention is based on Internet protocol data links and graphics processing units it does not have the limitations and constraints of conventional video processing apparatuses.

In window 401 the chroma key node 407 has a bold frame indicating that it has been selected by the user. Then in window 403 a label "Chromakey" and the unique identification number "4" of the selected chroma key node 407 are indicated. The currently applied parameters for the chroma key node 407 are displayed as a bar diagram. The user can adjust the parameters displayed in window 403. Alternatively or in addition to a bar diagram the parameters can be displayed in alphanumerical form. The user can select any other node displayed in the window 401 to adjust the corresponding parameters of the selected node.

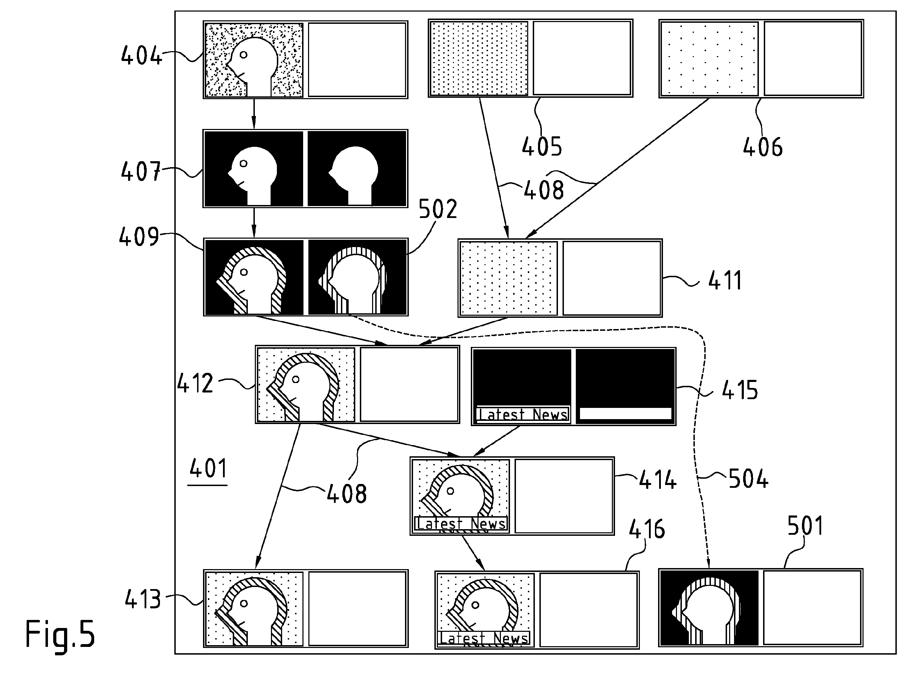

Figure 5 exhibits the corresponding video signals of the flow graph shown in window 401 in figure 4 with a supplementary preview output node 501 which will be explained further below. Each signal is shown as a fill signal on the left side of each node and as a luminance only signal on the right side of each node in figure 5.

Input node 404 provides the camera signal of the speaker in front of a blue screen. The chroma key node 407 removes the blue background and only the fill signal remains. Consequently, the key signal remains only in the area where the fill signal is present. The border generator node 409 generates a border 502 around the key signal. The border is also added as key signal to the outgoing key signal. Input node 405 provides a red background signal and input node 406 a yellow signal. The linear mixer node 411 generates from these two input signals an orange background signal. The output from border generator node 409 and from linear mixer node 411 is combined in key mixer 412. The output of key mixer node 412 is connected to the program output node 413 and to the key mixer node 414. A text generator node 415 generates a signal 503 comprising of a fill signal and a key signal in the shape of a text, supplying the second input signal for the mix keyer node 414.The output of key mixer 414 is finally coupled to the preset output node 416.

Referring back to the preview output node 501 the particular advantage of the video processing apparatus 301 becomes apparent. The preview output node 501 is connected by an edge symbolized as a dashed line arrow 504 to the key signal of border generator 409. The preview output node 501 provides a displayable signal such that the user can see the key signal of the border generator node 409 on a monitor in form of a grayscale image. As described in connection with figure 4 the graphical user interface 400 enables the user to connect any intermediate signal in the flow graph with the preview output node 501. Thus, the user can look at any intermediate signal. This is a tremendous advantage especially in complex video productions. If required, more than one of such node preview signals can be routed to output nodes. This advantage is very valuable because conventional video production systems do not have this flexibility and because of inherent hardware constraints it is not possible to look at any desired intermediate video signal in a complex video production.

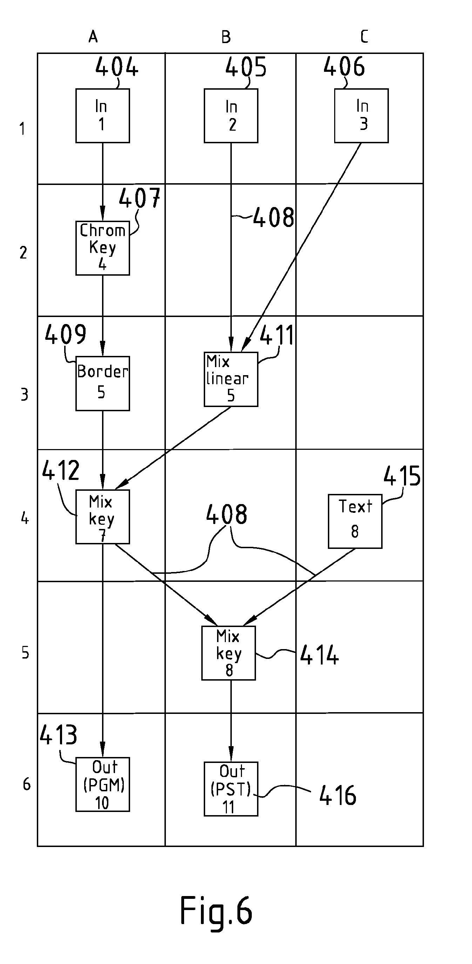

Figure 6 shows the flow graph of figure 4 in yet another representation to visualize further properties of the flow graph. In figure 6 the flow graph is displayed in a checkerboard like structure.

The checker board like structure (or briefly checkerboard) has three columns A to C and rows 1 to 6. In row 1 of the checker board shown in figure 6, input nodes 404 to 406 are the start nodes and output nodes 413 and 416 are the end nodes of the flow graph. The processing of the video input signals starts simultaneously at the start nodes 404 to 406 and continues row by row starting at row 1 and ending at row 6. The processing in the nodes placed within a single row proceeds in a serial way from left to right.

Thus, the user can define the sequence of the processing steps simply by placing the notes at specific positions on the checkerboard.

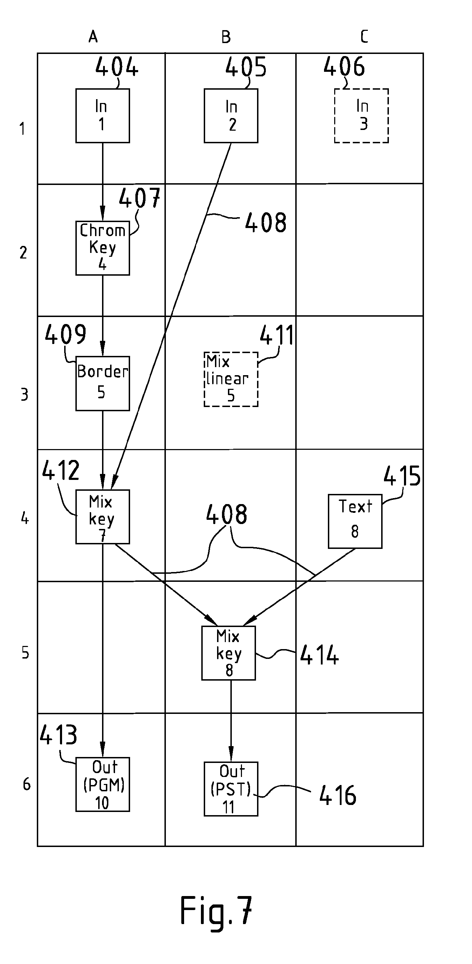

Another functionality of the graphical user interface 400 is explained with reference to figures 7. In the flow graph shown in figure 7 the signal of input node 405 is used as input signal for the key mixer node 412 instead of the output signal of linear mixer node 411. Hence, linear mixer node 411 and input node 406 no longer contribute to the program output signals provided at output nodes 413 and 416. The graphical user interface program notifies the user that the nodes 406 and 411 are no longer involved in the video processing by greying out the graphical elements associated with the nodes 406 and 411. This is indicated in figure 7 by illustrating the nodes 406 and 411 with dashed lines.

Although every processing operation exists only once in form of GPU object code it can be reused multiple times during the processing of a single flow graph. In practice, the output signal of the specific processing operation is used again as an input signal for the same processing operation. As of the flow graph control data structures reside in host memory they can be modified or entirely be replaced at any time in particular at video frame clock rate. Any conventional vision mixer architecture can be modelled by a video flow graph. However, in the opposite direction it is not possible because of the already mentioned hardware constraints of conventional vision mixers and video processing systems.

### List of reference numbers

- 100: vision mixer
- 102: crosspoint matrix
- 103: input signals
- 104: output signals
- 105: mixing and a video effect stage
- 106: process video output signal
- 107: input unit
- 108: control bus
- 109: control unit
- 111: control box
- 112: control box
- 201: connection point
- 211: pushbutton
- 212a, 212b: M/E stage
- 213a, 213b: effect levers
- 214: selection buttons
- 216: parameter input array
- 217: downstream keyer
- 301: video processing apparatus
- 302: graphics processing unit (GPU)
- 303, 304: data link
- 400: graphical user interface
- 401: Central window
- 402: left window
- 403: right window
- 404 - 406: input nodes
- 407: chroma key node
- 408: arrow
- 409: border generator
- 411: linear mixer node
- 412: key mixer node
- 413: program output node
- 414: key mixer node
- 415: text generator node
- 416: preset output node
- 501: preview output node
- 502: border
- 503: text keyer
- 504: dashed line arrow

## Claims

1. Method of controlling a video/audio processing apparatus, wherein the apparatus (301) comprises at least one graphics processing unit (302), the method comprising the following steps
- providing the graphics processing unit (302) with software enabling all operations of the graphics processing unit upon request;
- generating a flow graph composed of nodes (404-407, 409-416, 501) and edges (408, 504) wherein the nodes contain information about processing operations to be performed by the graphics processing unit and the edges contain information about routing of signals between the nodes;
- evaluating the flow graph to extract the information about desired processing operations and routing of signals;
- executing the processing operations by the at least one graphics processing unit according to the information represented by the nodes in the flow graph; and
- routing of the signals between the nodes contained in the flow graph.

2. Method according to claim 1, wherein the method further comprises the step of utilizing a graphical user interface (400) to generate the flow graph.

3. Method according to claim 2, wherein the method further comprises the step of associating graphical elements with the nodes and edges of the flow graph and displaying the graphical elements on a screen.

4. Method according to claim 1, wherein the method further comprises the step of displaying the flow graph on a screen in a checkerboard like structure.

5. Method according to claim 1, wherein the method further comprises the step of defining the sequence of the processing operations by selecting the positions of the graphical elements displayed on the screen.

6. Method according to claim 4 and 5, wherein the method further comprises the step of defining the sequence of the processing operations such that the processing starts from top to bottom and from left to right in the displayed checkerboard like structure.

7. Method according to claim 3, wherein the method further comprises the step of
- identifying nodes (406, 411) in the flow graph which are no longer involved in the video processing; and
- de-emphasizing those nodes on the screen.

8. Method according to claim 1, wherein the method further comprises the step of updating the executed object code in real time.

9. Video processing apparatus connected to a data link (303, 304) for receiving and sending video data, wherein the video processing apparatus (301) is provided with a graphics processing unit (302) to process video input data for producing video output data and wherein the video processing apparatus is adapted for executing the method according to one or several of the preceding claims.

10. Video processing apparatus according to claim 9, wherein the data links (303, 304) are part of an Internet protocol data or SDI network.

11. Video processing apparatus according to claim 9, wherein the video processing apparatus is provided with a graphical user interface (400) enabling the user to control the graphics processing unit (302).

12. Video processing apparatus according to claim 11, wherein the graphical user interface (400) is based on the flow graph defining the flow of video data and defining processing steps applied to the video data.

13. A program code for controlling a video/audio processing apparatus, wherein said program code, when executed on a computer, causes the computer to perform the steps of the method according to one or several of claims 1 to 8.

14. A computer program product for controlling a video/audio processing apparatus comprising a computer usable non-transitory storage medium having a computer readable program, wherein said computer readable program, when executed on a computer, causes the computer to perform the steps of the method according to one or several of claims 1 to 8.
